Europäisches Patentamt

European Patent Office

Office européen des brevets

(19)

(11) Publication number: **0 095 818**
**A1**

(12) **EUROPEAN PATENT APPLICATION**

(21) Application number: **83200787.6**

(22) Date of filing: **01.06.83**

(51) Int. Cl.³: **F 16 L 23/00, F 16 L 23/02**

(30) Priority: **02.06.82 NL 8202232**

(43) Date of publication of application: **07.12.83**
**Bulletin 83/49**

(84) Designated Contracting States: **AT BE CH DE FR GB IT LI LU NL SE**

(71) Applicant: **WAVIN B.V., Händellaan 251, NL-8031 EM Zwolle (NL)**

(72) Inventor: **Bollmer, Heinrich, 9 Friedhofstrasse, D-4477 Twist (DE)**

(74) Representative: **van der Veken, Johannes Adriaan, Ir. et al, EXTERPATENT 3 & 4 Willem Witsenplein, NL-2596 BK The Hague (NL)**

(54) **A pipe connection comprising two metal outer pipes.**

(57) A first thermoplastic pipe 9 with a socket end 10 is accommodated in a first metal outer pipe 1 provided with a socket end 8, a second thermoplastic pipe 12 accommodated in a second metal outer pipe 2 projecting into said socket end 8. A rigid ring 13 of thermoplastics sealingly engages through sealing rings 16, the inner side of socket 10 and the projecting end 11 of the second plastic pipe 12.

The outer side of the first metal outer pipe 1 is provided with an end flange 3 at its front end and bolts 18 connect this end flange 3 in a tensile-resistant manner to a connecting flange 17 on the second metal outer pipe 2, said connecting flange 17 being disposed at distance from the free end of said second metal outer pipe 2.

Preferably the second metal outer pipe 2 is connected to another metal flange 4 at its front end and in the final pipe connection a sealing ring 5 sealingly engages the flange surfaces 7, 6 respectively of said other flange 4 and end flange 3 of first metal outer pipe 1.

A pipe connection comprising two metal outer pipes.

The invention relates to a pipe connection comprising two metal outer pipes interconnected in a tensile-resistant manner, a sealing member inter-acting with said outer pipes and a first outer pipe being provided with a socket end.

A pipe connection of two metal outer pipes interconnected by means of flanges, is known in the art.

Pipe conduits comprising such connections present, especially in mining operations, a considerable amount of wear and corrosion, on the inner side of the metal outer pipes.

The present invention aims to provide a pipe connection of the aforementioned type in which said disadvantages do not arise.

This object is attained in accordance with the invention in that a first plastic pipe with a plastic socket end is provided in the first metal outer pipe with socket end, the other metal outer pipe also enclosing another plastic pipe, an end portion of same protruding beyond the front end of said outer metal outer pipe and being accommodated in said plastic socket end, a ring of rigid material sealingly cooperating with the inner side of the plastic socket end of the plastic pipe and with the outer side of the said end portion, by means of sealing rings.

A connection of this type is extremely suitable for applying a corrosion and wear-resistant coating in existing metal conduits.

The first and other plastic pipe are advantageously installed in the metal outer pipes with some clearance whereupon said plastic pipes are pressed against the inner wall of the metal outer pipes by means of an internal fluid pressure. This facilitates applying the plastic pipe in the metal outer pipes.

The invention will be illustrated with respect to an embodiment as shown in the drawing, wherein:

Fig. 1 is a view of a pipe connection according to the present invention, and
Fig. 2 is a view similar the pipe connection of fig. 1, the plastic pipes however having been pressed against the inner wall of the metal outer pipes with the aid of an internal fluid pressure.

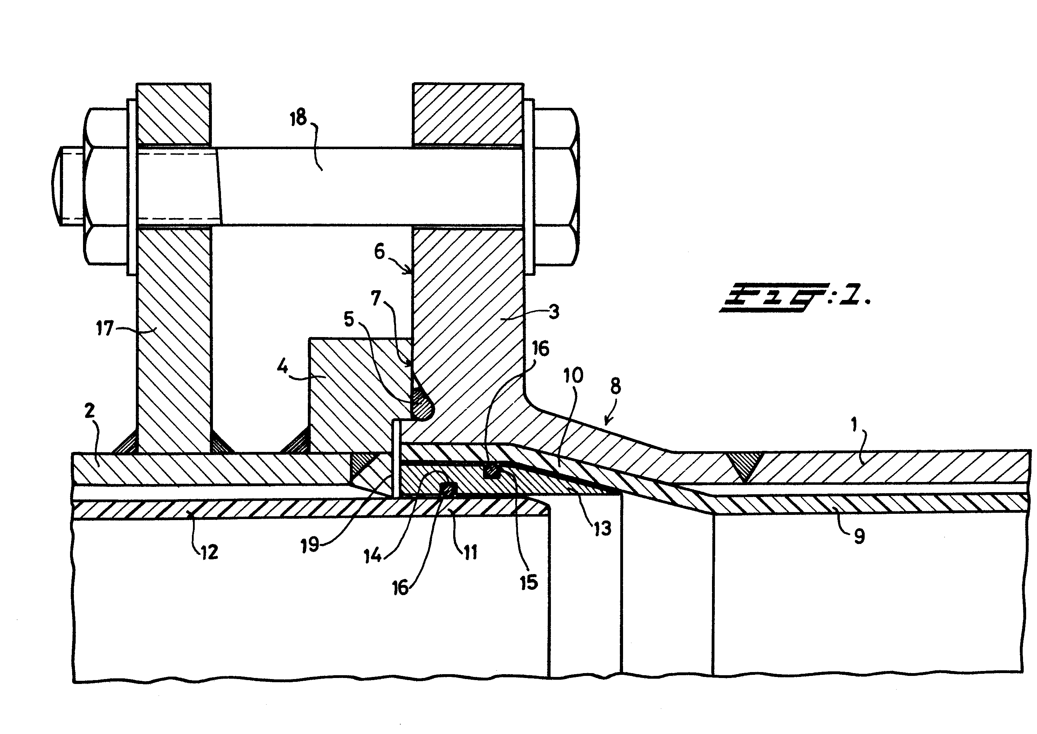

Fig. 1 is a pipe connection according to the invention, comprising a first metal outer pipe 1 and a second metal outer pipe 2, the front ends 19, 20 respectively of the metal outer pipes being at a small distance from each other.

The first metal outer pipe 1 comprises a socket end 8 and an end flange 3, having a first front flange surface 6, which front end surface comprises an annular space, in which a sealing ring 5 is accoommodated. Said sealing ring 5 sealingly co-operates with a flange surface 7 of another metal flange 4 at the front end of the other or second metal outer pipe 2.

The second metal outer pipe 2 furster comprises a connecting flange 17.

The outer pipes are interconnected in a tensile-resistant manner by means of bolts 18 engaging connecting flange 17 and end flange 3.

To avoid any disadvantageous effect to the inner side of the metal

-3-

outer pipes 1 and 2, by corrosion and/or wear, respectively, a second plastic pipe 12 is installed with clearance in the second outer pipe 2. Said plastic pipe 12 comprises an end part 11 which projects beyond the front end 19 of the outer pipe 2, into the plastic socket end 10 of a first plastic pipe 9 being accommodated with clearance in the first metal outer pipe 1. The outer side of the plastic socket end 10, however, of the first plastic pipe 9 adjoins the inner side of the socket end 8 of the first metal outer pipe 1. To sealingly interconnect the first plastic pipe 9 and the second plastic pipe 12, a rigid plastic ring 13 is provided comprising an outer chamber 15 and an inner chamber 14 in which sealing rings 16 are accommodated. Through the interaction of a sealing ring 16 with the outer side of end part 11 and with the inner side of plastic socket end 10, an optimum seal is obtained.

The rigid ring 13 advantageously consists of polyvinylchloride. The first plastic pipe 9 and the second plastic pipe 11 consist e.g. also of polyvinylchloride.

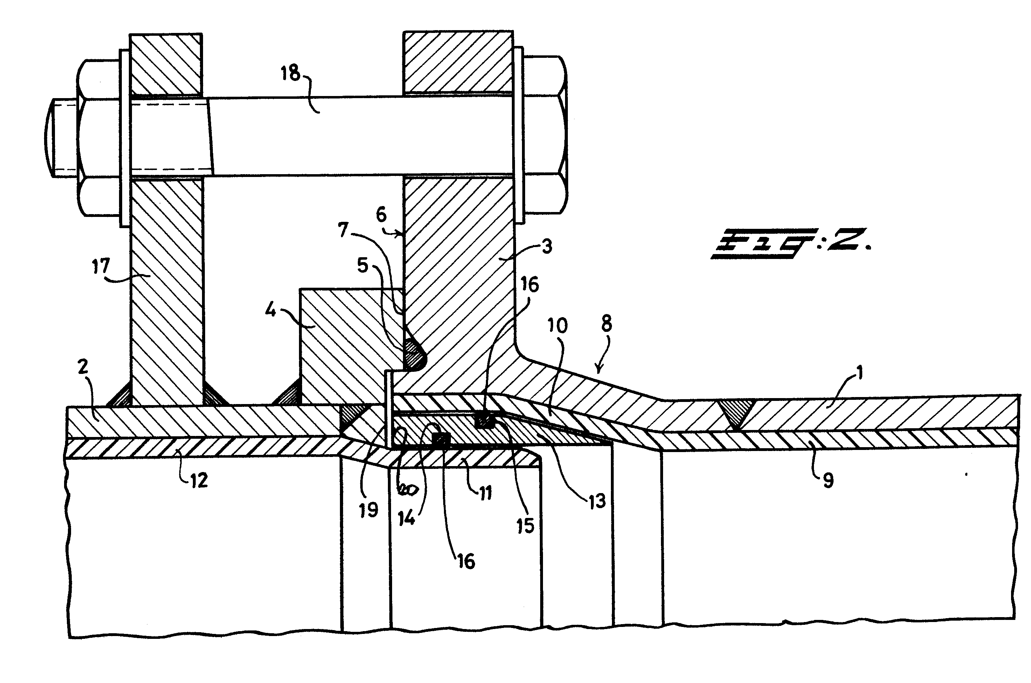

Fig. 2 illustrates an embodiment corresponding to that of fig. 1, the plastic pipes 9 and 12, however, having been pressed against the inner side of the metal pipes by an internal fluid pressure.

The inner and outer chambers 15 and 14 for accommodating sealing rings are preferably staggered with respect to each other so as to maintain the strength properties of the rigid ring 13.

It is observed that the reference numerals in the claims are not intended to restrict the scope thereof, but are only denoted for clarification.

## CLAIMS

1.    A pipe connection comprising two metal outer pipes interconnected in a tensile-resistant manner, a sealing member interacting with said outer pipes and a first outer pipe, being provided with a socket end, characterized in that a first plastic pipe (9) with a plastic socket end (10) is provided in the first metal outer pipe (1) with socket end (8), the other metal outer pipe (2) also enclosing another plastic pipe (12), an end portion (11) of same protruding beyond the front end of said other metal outer pipe (2) and being accommodated in said plastic socket end (10), a ring (13) of rigid material sealingly cooperating with the inner side of the plastic socket end (10) of the plastic pipe (9) and with the outer side of the said end portion (11) by means of sealing rings (16).

2.    A pipe connection as claimed in claim 1, characterized in that the rigid ring (13) comprises an outer chamber (15) and an inner chamber (14) and a sealing ring (16), being accommodated in said chambers.

3.    A pipe connection as claimed in claim 1 or 2, characterized in that the rigid ring (13) consists of a plastic material, more particularly a thermoplastic material.

4.    A pipe connection as claimed in any one or several of the foregoing claims, characterized in that the first plastic pipe (9) and the second plastic pipe (12) are accommodated in the first metal outer pipe (1) and the second metal outer pipe (2), with some clearance.

5.    A pipe connection as claimed in claim 3, characterized in that the outer side of the plastic socket end (10) adjoins the inner side of the socket end (8) of the first outer pipe (1).

6.    A pipe connection as claimed in any one or several of the preceding claims, characterized in that the first and second plastic pipe (9, 12) have been pressed against the inner wall of the metal outer pipes (1, 2) by means of an internal fluid pressure.

7.    A pipe connection as claimed in any one or more of the preceding claims, characterized in that the inner diameter of the front end of the second metal outer pipe (2) substantially corresponds to the inner diameter of the first plastic pipe (9).

8.    A pipe connection as claimed in any one or several of the preceding claims, characterized in that the outer metal pipes (1, 2) are provided with flanges (3, 17) to form a tensile-resistant connection.

9.    A pipe connection as claimed in claim 8, characterized in that an additional sealing ring (5) is accommodated between a first flange surface (6) and a second flange surface (7) opposite the latter.

0095818

Fig.2.

0095818

Fig.2.

0095818

European Patent
Office

**EUROPEAN SEARCH REPORT**

Application number

EP 83 20 0787

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | FR-A- 883 048 (MANNESMANN ROHREN-WERKE) * Figure 14 * | 1 | F 16 L 23/00 F 16 L 23/02 |
| | --- | | |
| A | GB-A- 836 825 (CIBA LTD.) | | |
| | --- | | |
| A | GB-A- 638 010 (RUSS) | | |
| | --- | | |
| A | FR-A-2 055 031 (DUNLOP COMP., LTD.) | | |
| | ----- | | |

TECHNICAL FIELDS
SEARCHED (Int. Cl. ³)

F 16 L

The present search report has been drawn up for all claims

| Place of search | Date of completion of the search | Examiner |
|---|---|---|
| THE HAGUE | 06-09-1983 | HUBEAU M.G. |